# EUROPÄISCHE PATENTSCHRIFT

(11) **EP 3 908 156 B1**
(45) Veröffentlichungstag und Bekanntmachung des Hinweises auf die Patenterteilung: **23.04.2025**
(21) Anmeldenummer: 20700479.7
(22) Anmeldetag: 10.01.2020
(51) Int. Cl.: A47C 4/02, A47C 7/54, F16B 12/26, F16B 12/38

(54) **SITZMÖBELCHASSIS**
SEATING FURNITURE CHASSIS
CHÂSSIS DE SIÈGE

(30) Priorität: 10.01.2019 DE 202019100109 U
(43) Veröffentlichungstag der Anmeldung: 17.11.2021
(73) Patentinhaber: Innotec Motion GmbH, 59558 Lippstadt (DE)
(72) Erfinder: MACKERT, Michael, 59602 Rüthen (DE)
(74) Vertreter: Schäperklaus, Jochen
(86) Internationale Anmeldenummer: PCT/EP2020/050510
(87) Internationale Veröffentlichungsnummer: WO 2020/144310

(56) Entgegenhaltungen:
- EP-A1- 2 796 074
- DE-A1- 102016 100 753
- DE-C1- 4 440 553

## Beschreibung

Die vorliegende Erfindung betrifft ein Sitzmöbelchassis nach dem Oberbegriff des Anspruchs 1.

Sitzmöbelchassis sind aus dem Stand der Technik bekannt. Sie werden für Sitzmöbel verwendet, indem Polsterungen an dem Sitzmöbelchassis angebracht werden. Häufig ermöglichen die Sitzmöbelchassis mechanische Funktionen des Sitzmöbels. Aus dem Stand der Technik sind auch Sitzmöbelchassis mit einem Grundkörper und lösbar daran befestigten Seitenteilen bekannt.

Die DE 10 2016 100 753 A1 offenbart einen Möbelbeschlag zur Verbindung von Möbelteilen mit einem an einem ersten Möbelteil befestigbaren ersten Beschlagteil und einem an einem zweiten Möbelteil befestigbaren zweiten Beschlagteil. Der Möbelbeschlag zeichnet sich dadurch aus, dass das erste Beschlagteil eine Basis aufweist und zwei parallel zueinander und parallel zu der Basis angeordnete Achsen. Eine erste der Achsen ist fest mit dem ersten Beschlagteil verbunden und eine zweite der Achsen ist relativ zu der ersten Achse in einer Richtung senkrecht zu den Achsen gegen eine Kraft eines Kraftspeichers verschiebbar gelagert. Das zweite Beschlagteil weist eine erste und eine zweite Aufnahme für die erste bzw. zweite Achse auf. Das zweite Beschlagteil ist mit der ersten Aufnahme auf die erste Achse aufsetzbar und um die erste Achse verschwenkbar. Die zweite Achse rastet beim Verschwenken in die zweite Aufnahme ein, um die beiden Beschlagteile miteinander zu verbinden.

Die EP 2 796 074 A1 offenbart ein Sitzmöbel mit einer Rückenlehne, einem Gestell und einer Verbindungseinrichtung zum Verbinden von Rückenlehne und Gestell. In einem Gebrauchszustand des Sitzmöbels ist eine erste Verbindung und eine zweite Verbindung zwischen der Rückenlehne und der Verbindungseinrichtung vorgesehen. Die erste Verbindung wird durch Absenken der Rückenlehne gegenüber der Verbindungseinrichtung geschlossen. Die Rückenlehne ist mittels der ersten Verbindung schwenkbar an der Verbindungseinrichtung gehalten. Die zweite Verbindung umfasst derart korrespondierende Anschlagflächen an der Rückenlehne und der Verbindungseinrichtung, dass in der Gebrauchsstellung ein Verschwenken der Rückenlehne nach hinten verhindert wird. Damit das Montieren der Rückenlehne einfacher und zuverlässiger erfolgen kann, ist vorgesehen, dass die Rückenlehne durch die erste Verbindung derart gegenüber der Verbindungseinrichtung positioniert ist, dass die korrespondierenden Anschlagflächen der zweiten Verbindung im Wesentlichen durch Verschwenken der Rückenlehne nach hinten in Anlage geraten.

Die DE 44 40 553 C1 offenbart eine Anordnung aus zwei im wesentlichen ebenen Platten, deren erste einen aus der Plattenebene abragenden Zentrierdorn und deren zweite eine die Plattenebene durchsetzende Zentrierdornaufnahme aufweist. Der Zentrierdorn greift bei parallel zueinander ausgerichteten und aneinander gelegten Platten in die Zentrierdornaufnahme ein, dass an den Platten Befestigungsmittel ausgebildet sind, die bei in die Zentrierdornaufnahme eingesetztem Zentrierdorn durch Drehung der Platten relativ zueinander um die Mittelachse des Zentrierdornes miteinander in Eingriff bringbar sind und die Platten in Montage-Solllage aneinander verriegeln.

Demgegenüber liegt der Erfindung die Aufgabe zugrunde, ein Sitzmöbelchassis mit einem einfach am Grundkörper befestigbaren Seitenteil zu schaffen

Diese Aufgabe wird durch ein Sitzmöbelchassis gemäß Anspruch 1 gelöst. Ausführungsformen der Erfindung sind in den abhängigen Ansprüchen angegeben.

Das Sitzmöbelchassis umfasst einen Grundkörper, Befestigungsmittel und ein Seitenteil. Unter einem Grundkörper wird dabei im Rahmen dieser Beschreibung insbesondere ein Konstrukt verstanden, das einen Sitzflächenrahmen und einen oder mehrere Standfüße umfasst, mit denen das Sitzmöbelchassis auf einer Bodenfläche aufstellbar ist. Es ist auch möglich, dass der Grundkörper eine Rückenlehne umfasst, die am Sitzflächenrahmen befestigt ist. Der Sitzflächenrahmen kann eine Sitzfläche umrahmen. Ein Benutzer kann nach Polsterung der Sitzfläche auf der Polsterung sitzen.

Die Befestigungsmittel sind am Grundkörper angeordnet. Beispielsweise können sie in einem seitlichen Randbereich des Grundkörpers angeordnet sein.

Das Seitenteil ist lösbar an den Befestigungsmitteln befestigbar. Unter einer lösbaren Befestigung wird dabei im Rahmen dieser Beschreibung insbesondere verstanden, dass das Seitenteil werkzeuglos an den Befestigungsmitteln befestigt werden kann und auch wieder werkzeuglos von den Befestigungsmitteln gelöst werden kann. Dabei ist zu beachten, dass sowohl bei der Befestigung als auch bei Lösung der Befestigung weder das Seitenteil noch die Befestigungsmittel beschädigt werden.

Unter einem Seitenteil wird im Rahmen dieser Beschreibung insbesondere ein Teil verstanden, das seitlich am Grundkörper angebracht wird. Hierunter werden insbesondere die Seiten verstanden, die sich in etwa senkrecht zur Vorder- und Rückseite des Grundkörpers erstrecken. Die Vorderseite kann dabei die Seite sein, zu der die Beine eines Benutzers bei bestimmungsgemäßer Benutzung des Sitzmöbelchassis über den Grundkörper hinausragen. Die Rückseite kann die Seite sein, an der sich beim Sitzmöbelchassis eine Rückenlehne befindet.

Die Befestigungsmittel umfassen ein Federelement und ein Befestigungselement. Das Federelement übt eine Kraft auf das Befestigungselement aus. Bei Befestigung des Seitenteils an den Befestigungsmitteln wird das Befestigungselement entgegen der Federkraft bewegt. Unter der Befestigung wird dabei im Rahmen dieser Beschreibung insbesondere der Vorgang des Befestigens des Seitenteils am Grundkörper verstanden. Auf diese Weise kann das Seitenteil durch Ausnutzung der Federkraft an den Befestigungsmitteln befestigt werden und durch Überwindung der Federkraft wieder gelöst werden.

Das abnehmbare Seitenteil hat insbesondere den Vorteil, dass der Grundkörper getrennt vom Seitenteil transportiert werden kann. Es müssen somit zwei einzelne voneinander gelöste und weniger sperrige Gegenstände anstatt eines einzelnen großen sperrigen Gegenstands transportiert werden. Es ist ebenfalls vorteilhaft, dass ein Benutzer zu Hause das Seitenteil an den Befestigungsmitteln befestigen kann, da er so ein für ihn passendes Seitenteil auswählen kann und nicht auf ein bestimmtes bereits am Grundkörper befestigtes Seitenteil festgelegt ist. Auch ein Austausch des Seitenteils wird vereinfacht.

Außerdem wird das Handling des Sitzmöbelchassis bei der Produktion vereinfacht. Aufgrund von Arbeitsschutzbestimmungen kann es aufgrund des Gewichts unzulässig sein, dass ein einzelner Arbeiter sowohl den Grundkörper als auch das Seitenteil gleichzeitig trägt. Da das Seitenteil und der Grundkörper jeweils einzeln getragen werden können, kann somit ein einzelner Arbeiter das komplette Sitzmöbelchassis ohne Hilfsmittel transportieren.

Das Seitenteil umfasst einen Aufnahmebereich. Das Befestigungselement ist im an den Befestigungsmitteln befestigten Zustand des Seitenteils im Aufnahmebereich angeordnet und wird durch die Federkraft im Aufnahmebereich gehalten.

Der Aufnahmebereich ist dazu ausgebildet, im an den Befestigungsmitteln befestigten Zustand des Seitenteils eine Klemmkraft auf das Befestigungselement auszuüben. Auf diese Weise wird eine besonders gute Befestigung erreicht und es wird sichergestellt, dass kein Spiel zwischen dem Befestigungselement und dem Aufnahmebereich vorhanden ist.

Die Befestigungsmittel umfassen ein Auflageelement. Das Seitenteil umfasst einen Auflagebereich. Der Auflagebereich ist dazu ausgebildet, bei der Befestigung des Seitenteils an den Befestigungsmitteln auf dem Auflageelement aufzuliegen. Dies kann insbesondere bedeuten, dass der Auflagebereich während der Schwenkbewegung des Seitenteils auf dem Auflageelement aufliegt. Auf diese Weise wird es für den Benutzer besonders einfach, die Schwenkbewegung richtig durchzuführen. Das Auflageelement und der Auflagebereich dienen dabei als Positionierungshilfe.

Die Befestigungsmittel umfassen ein erstes Formschlusselement, wobei das Seitenteil ein zweites Formschlusselement umfasst. Das erste Formschlusselement und das zweite Formschlusselement sind für eine formschlüssige Verbindung miteinander ausgebildet. Die formschlüssige Verbindung begrenzt oder verhindert eine vertikale Bewegung des Seitenteils relativ zu den Befestigungsmitteln. So kann das Seitenteil sicher an den Befestigungsmitteln befestigt werden.

Nach einer Ausführungsform der Erfindung kann das Seitenteil eine Armlehne umfassen. Unter einer Armlehne wird dabei im Rahmen dieser Beschreibung insbesondere ein Bauteil verstanden, das dazu ausgebildet ist, gepolstert zu werden und im gepolsterten Zustand als Armauflage für einen auf dem Sitzmöbelchassis sitzenden Benutzer zu dienen.

Nach einer Ausführungsform der Erfindung kann das Seitenteil dazu ausgebildet sein, mit einer Schwenkbewegung an den Befestigungsmitteln befestigt zu werden. Dies ist eine besonders einfache Art der Befestigung, die auch von einem Benutzer intuitiv, werkzeuglos und ohne großen Aufwand durchgeführt werden kann.

Nach einer Ausführungsform der Erfindung kann das Seitenteil eine Gleitfläche aufweisen. Das Befestigungselement kann dazu ausgebildet sein, bei der Befestigung des Seitenteils an den Befestigungsmitteln an der Gleitfläche entlang zu gleiten.

Nach einer Ausführungsform der Erfindung kann die Gleitfläche dazu ausgebildet sein, die Bewegung des Befestigungsmittels entgegen der Federkraft bei der Befestigung des Seitenteils an den Befestigungsmitteln auszulösen. Beispielsweise kann diese Bewegung automatisch während der Schwenkbewegung erfolgen. Somit wird die Befestigung des Seitenteils an den Befestigungsmitteln besonders einfach.

Nach einer Ausführungsform der Erfindung kann der Auflagebereich an eine äußere Form des Auflageelements angepasste Form aufweisen. Der Auflagebereich kann beispielsweise eine Rundung aufweisen, deren Radius in etwa einem Radius einer Rundung des Auflageelements entspricht. So wird die Durchführung der Schwenkbewegung noch einmal vereinfacht.

Nach einer Ausführungsform der Erfindung kann das Auflageelement eine Schwenkachse der Schwenkbewegung definieren. Unter der Schwenkachse wird dabei im Rahmen dieser Beschreibung insbesondere eine geometrische Achse verstanden, die nicht unbedingt als Bauteil vorhanden sein muss.

Nach einer Ausführungsform der Erfindung kann das Auflageelement stangenförmig ausgebildet sein. Unter dem Begriff "stangenförmig" wird im Rahmen dieser Beschreibung insbesondere eine längliche Ausgestaltung verstanden, bei der die Länge des Auflageelements die Breite und Höhe um ein Vielfaches übersteigt. Beispielsweise kann die Länge mehr als das 10-fache der Breite und der Höhe betragen.

Nach einer Ausführungsform der Erfindung kann das Auflageelement eine runde Querschnittsform aufweisen. Die runde Querschnittsform ist besonders vorteilhaft, um die Schwenkbewegung des Seitenteils gut durchführen zu können.

Nach einer Ausführungsform der Erfindung kann das Befestigungselement stangenförmig ausgebildet sein.

Nach einer Ausführungsform der Erfindung kann das Befestigungselement eine runde Querschnittsform aufweisen.

Nach einer Ausführungsform der Erfindung können die Befestigungsmittel ein Führungselement umfassen. Das Führungselement kann dazu ausgebildet sein, das Befestigungselement während der Bewegung entgegen der Federkraft zu führen.

Nach einer Ausführungsform der Erfindung kann das Führungselement dazu ausgebildet sein, das Befestigungselement in einer ersten Position entgegen der Federkraft zu halten. Das Befestigungselement kann dazu ausgebildet sein, bei der Bewegung entgegen der Federkraft aus der ersten Position in eine zweite Position bewegt zu werden.

Beispielsweise kann das Führungselement ein Langloch aufweisen, in dem das Befestigungselement geführt wird.

Nach einer Ausführungsform der Erfindung kann das Seitenteil werkzeuglos an den Befestigungsmitteln befestigbar und werkzeuglos von den Befestigungsmitteln lösbar sein.

Beim Verfahren gemäss Anspruch 11 wird ein Seitenteil eines Sitzmöbelchassis nach einer Ausführungsform der Erfindung an den Befestigungsmitteln dieses Sitzmöbelchassis befestigt. Dabei wird zunächst der Auflagebereich des Seitenteils auf dem Auflageelement der Befestigungsmittel aufgelegt. Anschließend wird die Schwenkbewegung um die durch das Auflageelement definierte Schwenkachse durchgeführt. Während der Schwenkbewegung wird das Befestigungselement entgegen der Federkraft bewegt.

Danach wird das Befestigungselement in den Aufnahmebereich durch die Federkraft eingeführt und im Aufnahmebereich eingeklemmt.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Dabei werden für gleiche oder ähnliche Bauteile und für Bauteile mit gleichen oder ähnlichen Funktionen dieselben Bezugszeichen verwendet. Darin zeigen:
- Fig. 1: schematische Schnittansichten des Ablaufs einer Befestigung eines Seitenteils an Befestigungsmitteln bei einem Sitzmöbelchassis nach einer Ausführungsform der Erfindung;

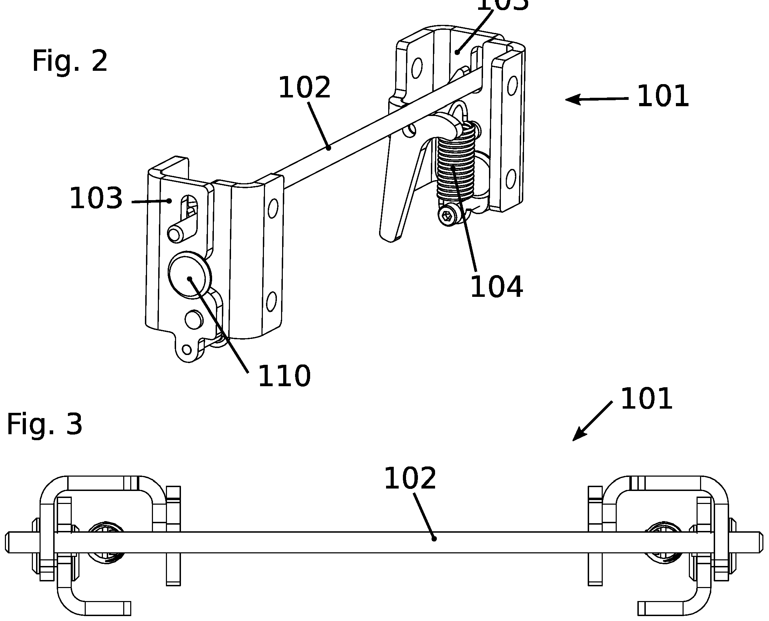

- Fig. 2: eine schematische perspektivische Ansicht von Befestigungsmitteln eines Sitzmöbelchassis nach einer Ausführungsform der Erfindung;
- Fig. 3: eine schematische Draufsicht auf die Befestigungsmittel aus Fig. 2;
- Fig. 4: eine schematische Draufsicht auf ein Sitzmöbelchassis nach einer Ausführungsform der Erfindung; und
- Fig. 5: eine schematische perspektivische Ansicht des Sitzmöbelchassis aus Fig. 4.

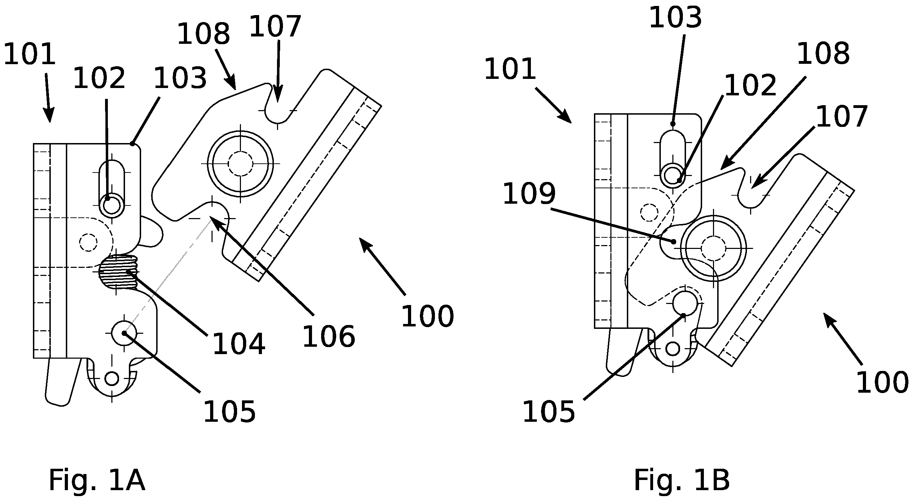

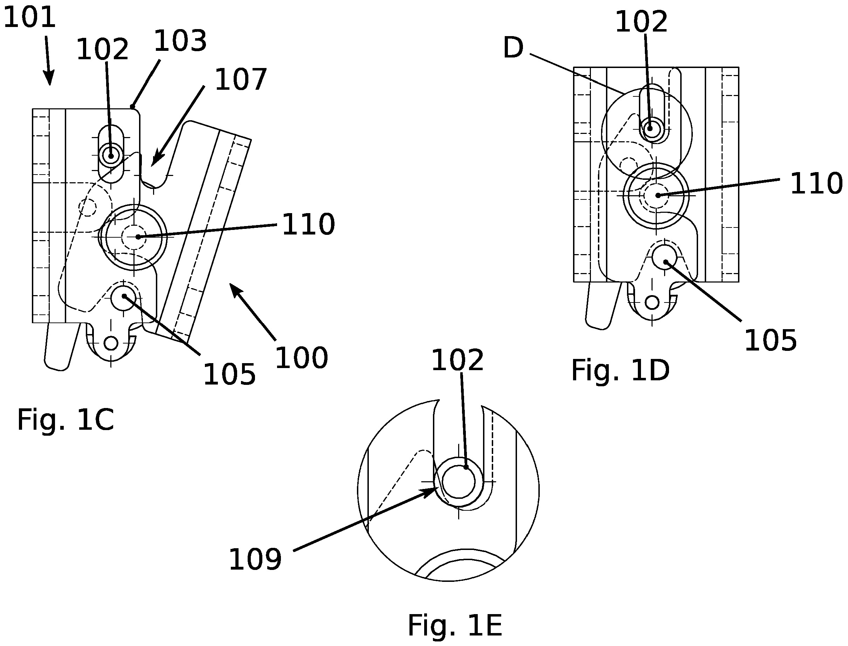

In den Figuren 1A bis 1D ist nur ein Abschnitt des Seitenteils 100 dargestellt. Dabei handelt es sich um den Abschnitt, mit dem das Seitenteil 100 an den Befestigungsmitteln 101 befestigt wird. In Figur 1E ist ein mit D in Figur 1D bezeichneter Ausschnitt vergrößert dargestellt.

Die Befestigungsmittel 101 umfassen ein Befestigungselement 102, ein Führungselement 103, ein Federelement 104 und ein Auflageelement 105. Das Seitenteil 100 weist einen Auflagebereich 106, einen Aufnahmebereich 107, eine Gleitfläche 108 und ein Klemmmittel 109 auf. Das Federelement 104 übt eine Federkraft auf das Befestigungselement 102 aus, sodass das Befestigungselement 102 in der in Figur 1A dargestellten ersten Position gehalten wird.

Um das Seitenteil 100 an den Befestigungsmitteln 101 zu befestigen, wird zunächst der Auflagebereich 106 auf das Auflageelement 105 aufgelegt. Um einem Benutzer den Zusammenbau zu erleichtern, können das Auflageelement 105 und der Auflagebereich 106 in der gleichen Farbe ausgestaltet sein. So kann dem Benutzer in einfacher Art und Weise verdeutlich werden, dass diese beiden Bauteile miteinander in Verbindung gebracht werden müssen. Zusätzlich oder alternativ können das Auflageelement 105 und der Auflagebereich 106 jeweils eine Formmarkierung aufweisen. Dies erleichtert den Zusammenbau insbesondere für blinde Menschen. Die Formmarkierungen können dabei identisch miteinander sein oder miteinander korrespondieren, sodass ertastbar ist, dass die beiden Bauteile zueinander gehören. In Figur 1B sind das Auflageelement 105 und der Auflagebereich im miteinander verbundenen Zustand dargestellt. Anschließend wird das Seitenteil 100 um eine Schwenkachse geschwenkt, die durch das Auflageelement 105 definiert wird. Bei dieser Schwenkbewegung gelangt die Gleitfläche 108 in Kontakt mit dem Befestigungselement 102 und bewegt es entgegen der Federkraft. Bei dieser Bewegung wird das Befestigungselement einem Langloch des Führungselements 103 geführt. Dieser Zustand ist in Figur 1C dargestellt.

Während der Schwenkbewegung gelangt ein Vorsprung 110 des Seitenteils 100, beispielsweise ein Bolzen oder ein Niet, in Eingriff mit einer Ausnehmung 109 an den Befestigungsmitteln 101. Der Vorsprung 110 und die Ausnehmung 109 bilden eine formschlüssige Verbindung in einer vertikalen Richtung aus. So wird eine vertikale Bewegung des Seitenteils 100 relativ zu den Befestigungsmitteln 101 begrenzt oder verhindert.

In Figur 1D ist dargestellt, wie das Seitenteil 100 an den Befestigungsmitteln 101 befestigt ist. Das Befestigungselement 102 befindet sich wieder in der ersten Position und wird dort durch die Federkraft gehalten. Außerdem übt das Klemmmittel 109 eine Klemmkraft auf das Befestigungselement 102 in dieser Position aus, sodass eine besonders gute Befestigung erreicht und ein mechanisches Spiel des Befestigungselements 102 in der ersten Position verringert wird.

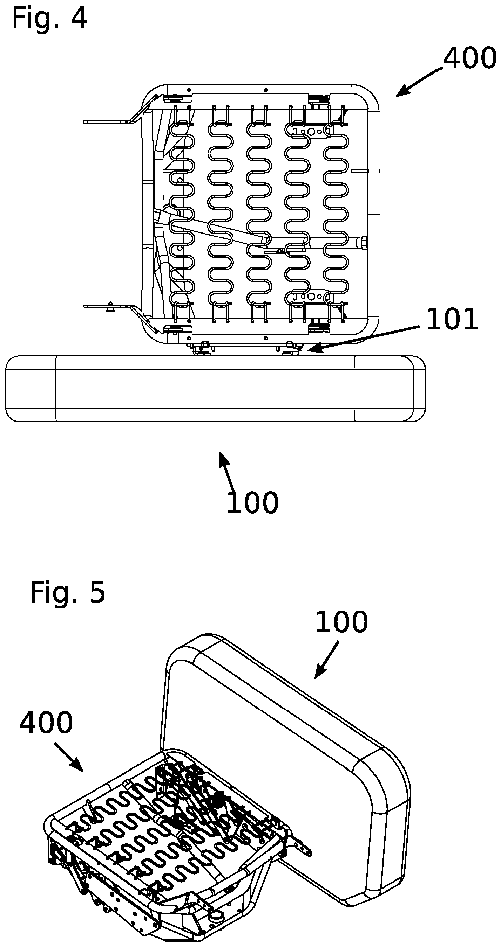

Aus den Figuren 4 und 5 ist ersichtlich, dass das Sitzmöbelchassis einen Sitzflächenrahmen 400 aufweist, an dem die Befestigungsmittel 101 angeordnet sind. Das Seitenteil 100 ist somit seitlich am Sitzflächenrahmen befestigt.

## Patentansprüche

1. Sitzmöbelchassis, umfassend einen Grundkörper, Befestigungsmittel (101) und zumindest ein Seitenteil (100), wobei die Befestigungsmittel (101) am Grundkörper angeordnet sind, wobei das Seitenteil (100) lösbar an den Befestigungsmitteln (101) befestigbar ist, wobei die Befestigungsmittel (101) ein Federelement (104) und ein Befestigungselement (102) umfassen, wobei das Federelement (104) eine Federkraft auf das Befestigungselement (102) ausübt, wobei bei Befestigung des Seitenteils (100) an den Befestigungsmitteln (101) das Befestigungselement (102) entgegen der Federkraft bewegt wird, wobei das Seitenteil (100) einen Aufnahmebereich (107) umfasst, wobei das Befestigungselement (102) im an den Befestigungsmitteln (101) befestigten Zustand des Seitenteils (100) im Aufnahmebereich (107) angeordnet ist und durch die Federkraft im Aufnahmebereich (107) gehalten wird, wobei der Aufnahmebereich (107) dazu ausgebildet ist, im an den Befestigungsmitteln (101) befestigten Zustand des Seitenteils (100) eine Klemmkraft auf das Befestigungselement (102) auszuüben, wobei die Befestigungsmittel (101) ein Auflageelement (105) umfassen, wobei das Seitenteil (100) einen Auflagebereich (106) umfasst, wobei der Auflagebereich (106) dazu ausgebildet ist, bei der Befestigung des Seitenteils (100) an den Befestigungsmitteln (101) auf dem Auflageelement (105) aufzuliegen, **dadurch gekennzeichnet, dass** die Befestigungsmittel (101) ein erstes Formschlusselement (109) umfassen, wobei das Seitenteil (100) ein zweites Formschlusselement (110) umfasst, wobei das erste Formschlusselement (109) und das zweite Formschlusselement (110) für eine formschlüssige Verbindung miteinander ausgebildet sind, wobei die formschlüssige Verbindung eine vertikale Bewegung des Seitenteils (100) relativ zu den Befestigungsmitteln (101) begrenzt oder verhindert.

2. Sitzmöbelchassis nach einem der vorherigen Ansprüche, **dadurch gekennzeichnet, dass** das Seitenteil (100) dazu ausgebildet ist, mit einer Schwenkbewegung an den Befestigungsmitteln (101) befestigt zu werden.

3. Sitzmöbelchassis nach dem vorherigen Anspruch, **dadurch gekennzeichnet, dass** das Seitenteil (100) eine Gleitfläche (108) aufweist, wobei das Befestigungselement (102) dazu ausgebildet ist, bei der Befestigung des Seitenteils (100) an den Befestigungsmitteln (101) an der Gleitfläche (108) entlang zu gleiten.

4. Sitzmöbelchassis nach dem vorherigen Anspruch, **dadurch gekennzeichnet, dass** die Gleitfläche (108) dazu ausgebildet ist, die Bewegung des Befestigungsmittels (102) entgegen der Federkraft bei der Befestigung des Seitenteils (100) an den Befestigungsmitteln (101) auszulösen.

5. Sitzmöbelchassis nach einem der vorherigen Ansprüche, **dadurch gekennzeichnet, dass** der Auflagebereich (106) eine an eine äußere Form des Auflageelements (105) angepasste Form aufweist.

6. Sitzmöbelchassis nach einem der beiden vorherigen Ansprüche, **dadurch gekennzeichnet, dass** das Auflageelement (105) eine Schwenkachse der Schwenkbewegung definiert.

7. Sitzmöbelchassis nach einem der vorherigen Ansprüche, **dadurch gekennzeichnet, dass** das Befestigungselement (102) stangenförmig ausgebildet ist.

8. Sitzmöbelchassis nach einem der vorherigen Ansprüche, **dadurch gekennzeichnet, dass** das Befestigungselement (102) eine runde Querschnittsform aufweist.

9. Sitzmöbelchassis nach einem der vorherigen Ansprüche, **dadurch gekennzeichnet, dass** die Befestigungsmittel (101) ein Führungselement (103) umfassen, wobei das Führungselement (103) dazu ausgebildet ist, das Befestigungselement (102) während der Bewegung entgegen der Federkraft zu führen.

10. Sitzmöbelchassis nach dem vorherigen Anspruch, **dadurch gekennzeichnet, dass** das Führungselement (103) dazu ausgebildet ist, das Befestigungselement (102) in einer ersten Position entgegen der Federkraft zu halten, wobei das Befestigungselement (102) dazu ausgebildet ist, bei der Bewegung entgegen der Federkraft aus der ersten Position in eine zweite Position bewegt zu werden.

11. Verfahren zur Befestigung eines Seitenteils (100) eines Sitzmöbelchassis nach einem der vorherigen Ansprüche an den Befestigungsmitteln (101) des Sitzmöbelchassis, wobei das Verfahren die folgenden Schritte umfasst:
- Auflegen des Auflagebereichs (106) des Seitenteils (100) auf dem Auflageelement (105) der Befestigungsmittel (101);
- Durchführen einer Schwenkbewegung um die durch das Auflageelement (105) definierte Schwenkachse, wobei während der Schwenkbewegung das Befestigungselement (102) entgegen der Federkraft bewegt wird;
- Einführen des Befestigungselements (102) in den Aufnahmebereich (107) durch die Federkraft; und
- Einklemmen des Befestigungselements (102) im Aufnahmebereich (107).

## Claims

1. Seating furniture chassis, comprising a main body, fastening means (101) and at least one side part (100), wherein the fastening means (101) are arranged on the main body, wherein the side part (100) is releasably fastenable to the fastening means (101), wherein the fastening means (101) comprise a spring element (104) and a fastening element (102), wherein the spring element (104) exerts a spring force on the fastening element (102), wherein, when the side part (100) is fastened to the fastening means (101), the fastening element (102) is moved counter to the spring force, wherein the side part (100) comprises a receiving region (107), wherein the fastening element (102) is arranged in the receiving region (107) in the state of the side part (100) fastened to the fastening means (101) and is held in the receiving region (107) by the spring force, wherein the receiving region (107) is designed to exert a clamping force on the fastening element (102) in the state of the side part (100) fastened to the fastening means (101), wherein the fastening means (101) comprise a support element (105), wherein the side part (100) comprises a support region (106), wherein the support region (106) is designed to rest on the support element (105) when the side part (100) is fastened to the fastening means (101), **characterized in that** the fastening means (101) comprise a first form-fitting element (109), wherein the side part (100) comprises a second form-fitting element (110), wherein the first form-fitting element (109) and the second form-fitting element (110) are designed for a form-fitting connection to one another, wherein the form-fitting connection limits or prevents a vertical movement of the side part (100) relative to the fastening means (101).

2. Seating furniture chassis according to one of the preceding claims, **characterized in that** the side part (100) is designed to be fastened to the fastening means (101) with a pivoting movement.

3. Seating furniture chassis according to the preceding claim, **characterized in that** the side part (100) has a sliding surface (108), wherein the fastening element (102) is designed to slide along the sliding surface (108) when the side part (100) is fastened to the fastening means (101).

4. Seating furniture chassis according to the preceding claim, **characterized in that** the sliding surface (108) is designed to trigger the movement of the fastening means (102) counter to the spring force when the side part (100) is fastened to the fastening means (101).

5. Seating furniture chassis according to one of the preceding claims, **characterized in that** the support region (106) has a shape adapted to an outer shape of the support element (105).

6. Seating furniture chassis according to one of the two preceding claims, **characterized in that** the support element (105) defines a pivot axis of the pivoting movement.

7. Seating furniture chassis according to one of the preceding claims, **characterized in that** the fastening element (102) is of rod-shaped design.

8. Seating furniture chassis according to one of the preceding claims, **characterized in that** the fastening element (102) has a round cross-sectional shape.

9. Seating furniture chassis according to one of the preceding claims, **characterized in that** the fastening means (101) comprise a guide element (103), wherein the guide element (103) is designed to guide the fastening element (102) counter to the spring force during the movement.

10. Seating furniture chassis according to the preceding claim, **characterized in that** the guide element (103) is designed to hold the fastening element (102) in a first position counter to the spring force, wherein the fastening element (102) is designed to be moved from the first position into a second position during the movement counter to the spring force.

11. Method for fastening a side part (100) of a seating furniture chassis according to one of the preceding claims to the fastening means (101) of the seating furniture chassis, wherein the method comprises the following steps:
- placing the support region (106) of the side part (100) on the support element (105) of the fastening means (101);
- carrying out a pivoting movement about the pivot axis defined by the support element (105), wherein, during the pivoting movement, the fastening element (102) is moved counter to the spring force;
- introducing the fastening element (102) into the receiving region (107) by the spring force; and
- clamping the fastening element (102) in the receiving region (107).

## Revendications

1. Châssis de meuble d'assise, comprenant un corps de base, des moyens de fixation (101) et au moins une partie latérale (100), les moyens de fixation (101) étant disposés sur le corps de base, la partie latérale (100) pouvant être fixée de manière amovible sur les moyens de fixation (101), **caractérisé en ce que** les moyens de fixation (101) comprennent un élément de ressort (104) et un élément de fixation (102), l'élément de ressort (104) exerçant une force de ressort sur l'élément de fixation (102), l'élément de fixation (102) étant déplacé à l'encontre de la force de ressort lors de la fixation de la partie latérale (100) sur les moyens de fixation (101), la partie latérale (100) comprenant une zone de réception (107), l'élément de fixation (102) étant disposé dans la zone de réception (107) dans l'état de la partie latérale (100) fixée sur les moyens de fixation (101) et étant maintenu dans la zone de réception (107) par la force de ressort, la zone de réception (107) étant réalisée pour exercer une force de serrage sur l'élément de fixation (102) dans l'état de la partie latérale (100) fixée sur les moyens de fixation (101), les moyens de fixation (101) comprenant un élément d'appui (105), la partie latérale (100) comprenant une zone d'appui (106), la zone d'appui (106) étant réalisée pour reposer sur l'élément d'appui (105) lors de la fixation de la partie latérale (100) sur les moyens de fixation (101), **caractérisé en ce que** les moyens de fixation (101) comprennent un premier élément de complémentarité de forme (109), la partie latérale (100) comprenant un deuxième élément de complémentarité de forme (110), le premier élément de complémentarité de forme (109) et le deuxième élément de complémentarité de forme (110) étant réalisés pour une liaison par complémentarité de forme l'un avec l'autre, la liaison par complémentarité de forme limitant ou empêchant un mouvement vertical de la partie latérale (100) par rapport aux moyens de fixation (101).

2. Châssis de meuble d'assise selon l'une quelconque des revendications précédentes, **caractérisé en ce que** la partie latérale (100) est réalisée pour être fixée sur les moyens de fixation (101) avec un mouvement de pivotement.

3. Châssis de meuble d'assise selon la revendication précédente, **caractérisé en ce que** la partie latérale (100) présente une surface de glissement (108), l'élément de fixation (102) étant réalisé pour glisser le long de la surface de glissement (108) lors de la fixation de la partie latérale (100) sur les moyens de fixation (101).

4. Châssis de meuble d'assise selon la revendication précédente, **caractérisé en ce que** la surface de glissement (108) est réalisée pour déclencher le mouvement du moyen de fixation (102) à l'encontre de la force de ressort lors de la fixation de la partie latérale (100) sur les moyens de fixation (101).

5. Châssis de meuble d'assise selon l'une quelconque des revendications précédentes, **caractérisé en ce que** la zone d'appui (106) présente une forme adaptée à une forme extérieure de l'élément d'appui (105).

6. Châssis de meuble d'assise selon l'une quelconque des deux revendications précédentes, **caractérisé en ce que** l'élément d'appui (105) définit un axe de pivotement du mouvement de pivotement.

7. Châssis de meuble d'assise selon l'une quelconque des revendications précédentes, **caractérisé en ce que** l'élément de fixation (102) est réalisé en forme de barre.

8. Châssis de meuble d'assise selon l'une quelconque des revendications précédentes, **caractérisé en ce que** l'élément de fixation (102) présente une forme de section transversale ronde.

9. Châssis de meuble d'assise selon l'une quelconque des revendications précédentes, **caractérisé en ce que** les moyens de fixation (101) comprennent un élément de guidage (103), l'élément de guidage (103) étant réalisé pour guider l'élément de fixation (102) à l'encontre de la force de ressort pendant le mouvement.

10. Châssis de meuble d'assise selon la revendication précédente, **caractérisé en ce que** l'élément de guidage (103) est réalisé pour maintenir l'élément de fixation (102) dans une première position à l'encontre de la force de ressort, l'élément de fixation (102) étant réalisé pour être déplacé de la première position dans une deuxième position lors du mouvement à l'encontre de la force de ressort.

11. Procédé de fixation d'une partie latérale (100) d'un châssis de meuble d'assise selon l'une quelconque des revendications précédentes sur les moyens de fixation (101) du châssis de meuble d'assise, le procédé comprenant les étapes suivantes :
- pose de la zone d'appui (106) de la partie latérale (100) sur l'élément d'appui (105) des moyens de fixation (101) ;
- réalisation d'un mouvement de pivotement autour de l'axe de pivotement défini par l'élément d'appui (105), l'élément de fixation (102) étant déplacé à l'encontre de la force de ressort pendant le mouvement de pivotement ;
- introduction de l'élément de fixation (102) dans la zone de réception (107) par la force de ressort ; et
- serrage de l'élément de fixation (102) dans la zone de réception (107).
